# EUROPÄISCHE PATENTSCHRIFT

(11) **EP 1 455 078 B1**
(45) Veröffentlichungstag und Bekanntmachung des Hinweises auf die Patenterteilung: **19.11.2008**
(21) Anmeldenummer: 03100557.2
(22) Anmeldetag: 06.03.2003
(51) Int. Cl.: F02M 25/07, F02B 29/04, F02D 9/04, F02D 13/02, F02D 21/08

(54) **Brennkraftmaschine mit einem Abgasturbolader und einem Abgasrückführsystem**
Internal combustion engine having a turbocharger and an exhaust gas recirculation system
Moteur à combustion interne ayant un turbocompresseur et un système de recyclage des gaz d'échappement

(43) Veröffentlichungstag der Anmeldung: 08.09.2004
(73) Patentinhaber: Ford Global Technologies, LLC, Dearborn, MI 48126 (US)
(72) Erfinder: Vigild, Christian Winge, 52070, Aachen (DE); Nitsche, Thomas, 52062, Aachen (DE); Roettger, Daniel, 4731, Eynatten (BE); Karvounis, Evangelos, 52070, Aachen (DE)
(74) Vertreter: Drömer, Hans-Carsten

(56) Entgegenhaltungen:
- EP-A- 0 080 983
- DE-A- 4 240 239
- PATENT ABSTRACTS OF JAPAN vol. 2003, no. 01, 14. Januar 2003 (2003-01-14) -& JP 2002 276405 A (ISUZU MOTORS LTD), 25. September 2002 (2002-09-25)
- PATENT ABSTRACTS OF JAPAN vol. 1996, no. 11, 29. November 1996 (1996-11-29) -& JP 08 170539 A (MITSUBISHI MOTORS CORP), 2. Juli 1996 (1996-07-02)
- PATENT ABSTRACTS OF JAPAN vol. 2000, no. 07, 29. September 2000 (2000-09-29) -& JP 2000 097017 A (TOYOTA MOTOR CORP), 4. April 2000 (2000-04-04)
- PATENT ABSTRACTS OF JAPAN vol. 1999, no. 13, 30. November 1999 (1999-11-30) -& JP 11 210449 A (MAZDA MOTOR CORP), 3. August 1999 (1999-08-03)
- PATENT ABSTRACTS OF JAPAN vol. 018, no. 660 (M-1722), 14. Dezember 1994 (1994-12-14) -& JP 06 257519 A (MAZDA MOTOR CORP), 13. September 1994 (1994-09-13)
- PATENT ABSTRACTS OF JAPAN vol. 018, no. 660 (M-1722), 14. Dezember 1994 (1994-12-14) -& JP 06 257518 A (MAZDA MOTOR CORP), 13. September 1994 (1994-09-13)
- PATENT ABSTRACTS OF JAPAN vol. 2002, no. 05, 3. Mai 2002 (2002-05-03) -& JP 2002 021625 A (HINO MOTORS LTD), 23. Januar 2002 (2002-01-23)
- PATENT ABSTRACTS OF JAPAN vol. 1999, no. 14, 22. Dezember 1999 (1999-12-22) -& JP 11 257161 A (NISSAN DIESEL MOTOR CO LTD), 21. September 1999 (1999-09-21)

## Beschreibung

Die Erfindung betrifft eine Brennkraftmaschine, enthaltend einen Abgasturbolader, ein Abgasnachbehandlungssystem und eine Niederdruck-Abgasrückführungsleitung.

Aus der US 5 927 075 ist ein Dieselmotor bekannt, dessen Abgase über die Turbine eines Abgasturboladers und anschließend durch einen Partikelfilter geführt werden. Die Turbine treibt einen im Luftzufuhrweg zum Motor angeordneten Kompressor zur Erhöhung des Ladedrucks an. Des Weiteren ist eine Niederdruck-Abgasrückführungs-(AGR)-Leitung vorgesehen, welche vom Abgasweg "hinter" dem Teilchenfilter (d.h. stromabwärts gelegen) über einen Abgaskühler zu einem Mischventil führt. Im Mischventil werden das rückgeführte Abgas und Frischluft in einem einstellbaren Verhältnis gemischt und über einen elektrisch angetriebenen Kompressor dem Ansaugkrümmer des Dieselmotors an einer Stelle hinter dem Kompressor des Abgasturboladers zugeführt. Nachteilig bei diesem System ist der Aufwand für den zusätzlichen Kompressor und dessen Steuerung, wodurch der Motor zudem prinzipiell störanfälliger wird.

Aus der JP2002 276 405 A ist eine Brennkraftmaschine mit einem Abgasturbolader und einem Abgasnachbehandlungssystem bestehend aus einem Dieselteilchenfilter und einem NOx-Katalysator bekannt. Eine Hochdruck-AGR-Leitung führt vom Abgasweg vor dem Abgasnachbehandlungssystem zum Luftzufuhrweg hinter dem Kompressor, und eine Niederdruck-AGR-Leitung führt von einer Stelle zwischen dem Teilchenfilter und dem NOx-Katalysator zum Luftzufuhrweg vor dem Kompressor.

Vor diesem Hintergrund war es Aufgabe der vorliegenden Erfindung, eine Brennkraftmaschine mit einem Abgasturbolader und einer Abgasrückführung bereitzustellen, welche kostengünstig zu realisieren ist und durch Einflußnahme auf Druck, Temperatur und/oder Abgasrückführungsrate einen optimierten Motorbetrieb ermöglicht.

Diese Aufgabe wird durch eine Brennkraftmaschine mit den Merkmalen des Anspruchs 1 gelöst. Vorteilhafte Ausgestaltungen sind in den Unteransprüchen enthalten.

Die erfindungsgemäße Brennkraftmaschine enthält die folgenden Komponenten:
a) Einen Abgasturbolader, dessen im Abgasweg der Brennkraftmaschine angeordnete Turbine vom Motorabgas angetrieben wird, und dessen mit der Tu r-bine gekoppelter Kompressor im Luftzufuhrweg zum Motor liegt und dort für eine Erhöhung des Ladedrucks sorgt.
b) Einen im Abgasweg hinter (d.h. stromabwärts) der Turbine des Abgasturboladers angeordnetes Abgasnachbehandlungssystem. Hierbei kann es sich insbesondere um einen Oxidationskatalysator und/oder einen (Diesel-)Partikelfilter handeln.
c) Eine Niederdruck-Abgasrückführungs-(AGR-)leitung, welche vom Abgasweg des Motors hinter dem Abgasnachbehandlungssystem (d.h. stromabwärts gelegen) zum Luftzufuhrweg vor (d.h. stromaufwärts) dem Kompressor führt. Da am Einlaß und Auslaß der Abgasrückführungsleitung ein verhältnismäßig geringer Gasdruck vorliegt, wird diese als "Niederdruck"-Leitung bezeichnet.
d) Eine Hochdruck-Abgasrückführungsleitung, welche vom A b-gasweg vor dem Abgasnachbehandlungssystem zum Luftzufuhrweg hinter dem Kompressor des Abgasturboladers führt.

Die erfindungsgemäße Brennkraftmaschine weist somit zwei voneinander unabhängige AGR-Wege auf, von denen der eine ein Niederdruck-Weg ist, der die einen niedrigen Druck aufweisenden Abschnitte des Abgasweges hinter dem Katalysator und des Luftzufuhrweges vor dem Kompressor miteinander verbindet. Der Hochdruck-Weg verbindet demgegenüber die mit hohem Druck beaufschlagten Abschnitte des Abgasweges vor dem Katalysator und des Luftzufuhrweges zwischen Kompressor und Brennkraftmaschine. Durch diese zwei unabhängigen AGR-Wege steht unter allen Betriebsbedingungen der

Brennkraftmaschine die jeweils optimale Abgasrückführungsart bzw. das optimale Kombinationsverhältnis beider Rückführungsarten zur Verfügung. Da das Abgas in den beiden AGR-Wegen in der Regel unterschiedliche Temperaturen aufweist, kann durch das eingestellte Kombinationsverhältnis auch die Temperatur im Ansaugkrümmer beeinflußt werden. Falls erforderlich, kann ferner in der Hochdruck-AGR-Leitung und/oder in der Niederdruck-AGR-Leitung ein Zwischenkühler vorgesehen sein.

Gemäß einer ersten Ausführungsform der Erfindung ist im Abgasweg der Brennkraftmaschine hinter dem Abzweig oder an dem Abzweig der Niederdruck-AGR-Leitung ein Druckregelventil angeordnet. Hierdurch kann der Druck des Abgases im Abgasweg kontrolliert werden, was für die Steuerung der Vorgänge im stromaufwärts gelegenen Abgasnachbehandlungssystem sowie für die Abgasrückführungsrate durch die Niederdruck-AGR-Leitung wichtig ist.

Vorzugsweise ist ferner am Auslass der Niederdruck-AGR-Leitung, welcher in die Luftzufuhrleitung führt, ein Regelventil angeordnet. Über dieses Regelventil läßt sich die Menge an auf dem Niederdruck-Weg rückgeführtem Abgas kontrollieren und dieser Weg z. B. auch unterbrechen.

Der vom Abgasweg vor dem Abgasnachbehandlungssystem abzweigende Einlaß der Hochdruck-AGR-Leitung kann an verschiedenen Punkten zwischen dem Abgaskrümmer und dem Abgasnachbehandlungssystem der Brennkraftmaschine ansetzen. Gemäß einer ersten Ausgestaltung ist dieser zwischen der Turbine und dem Abgasnachbehandlungssystem des Abgasturboladers vorgesehen. Dies hat den Vorteil, daß das gesamte Abgas über die Turbine geleitet wird und daher zu deren Antrieb beiträgt.

Alternativ kann der Einlaß der Hochdruck-AGR-Leitung vor der Turbine des Abgasturboladers vom Abgasweg abzweigen, was den Vorteil hat, daß die Abgasrückführung unter einem höheren Abgasdruck stattfindet. Optional kann auch je ein Einlaß vor und hinter der Turbine vorgesehen sein, zwischen denen nach Bedarf umgeschaltet werden kann. Ein Einlaß der Hochdruck-AGR-Leitung vor der Turbine wird vorzugsweise in Kombination mit einem Drosselventil eingesetzt, welches im Luftzufuhrweg stromaufwärts vor dem Auslaß der Hochdruck-AGR-Leitung in den Luftzufuhrweg angeordnet ist. Durch ein derartiges Drosselventil kann dann der Druck im Luftzufuhrweg verändert werden, um auf diese Weise die Menge des rückgeführten Abgases zu steuern.

Gemäß einer anderen Weiterbildung der Brennkraftmaschine ist in dem Frischluftweg zwischen dem Kompressor des Abgasturboladers und dem Ansaugkrümmer der Brennkraftmaschine ein in seiner Kühlwirkung einstellbarer Zwischenkühler angeordnet. Durch Veränderung der Einstellung kann daher Einfluß auf die Gastemperatur im Ansaugkrümmer der Brennkraftmaschine genommen werden und diese z.B. auf einem für den Motorbetrieb optimalen Wert gehalten werden.

Die Erfindung betrifft weiterhin eine zweite Ausführungsform einer Brennkraftmaschine mit den vorstehend erläuterten Merkmalen a) bis d) und die verschiedenen Abwandlungen der vorstehend erläuterten Brennkraftmaschine weitergebildet sein kann. Die zweite Ausführungsform der Brennkraftmaschine ist dadurch gekennzeichnet, daß der Luftzufuhrweg auf dem Abschnitt zwischen dem Kompressor des Abgasturboladers und dem Ansaugkrümmer der Brennkraftmaschine einen ersten Zweig und einen hierzu funktional parallelen (gegebenenfalls auch geometrisch parallelen) zweiten Zweig aufweist, wobei in dem zweiten Zweig ein Zwischenkühler angeordnet ist und wobei die Ve r-teilung der Flussraten auf den ersten und den zweiten Zweig einstellbar ist.

Eine derartige Brennkraftmaschine erlaubt eine Kontrolle der Temperatur des Gases im Ansaugkrümmer, indem das Verhältnis der über den Zwischenkühler beziehungsweise daran vorbei geführten Gasströme entsprechend eingestellt wird. Zu beachten ist, daß aufgrund der Niederdruck-AGR-Leitung (Merkmal c)) eine Mischung aus Frischluft und rückgeführtem Abgas vom Kompressor zum Ansaugkrümmer transportiert wird. Die im Abgas auftretenden Temperaturschwankungen können dabei durch eine entsprechende Verteilung der Gasströme auf die beiden Zweige ausgeglichen werden. Der Zwischenkühler kann verhältnismäßig einfach und z.B. mit einer konstanten Leistung ausgelegt werden.

Vorzugsweise ist in den beiden genannten Zweigen des Luftzufuhrweges jeweils ein Regelventil zwischen Kompressor und Ansaugkrümmer und/oder ein Mischventil am stromabwärtigen Verbindungspunkt der Zweige angeordnet. Über diese Ventile kann die gewünschte einstellbare Verteilung der Gasströme in den beiden Zweigen bewirkt und bei Bedarf ein Zweig komplett abgeschaltet werden.

Gemäß einer Weiterbildung der Brennkraftmaschine ist einer der Zweige des Luftzufuhrweges nur an die Frischluftzufuhr und der andere der Zweige (vorzugsweise der über den Zwischenkühler geführte zweite Zweig) an eine Mischleitung angeschlossen, wobei die Mischleitung von der Frischluftzufuhr und einer AGR-Leitung (z.B. der Niederdruck-AGR-Leitung) gespeist wird. Einer der Zweige führt somit stets nur Frischluft, während der andere eine Mischung aus Frischluft und rückgeführtem Abgas führt. Dies hat den Vorteil, daß bei Bedarf (z. B. bei einer plötzlichen hohen Leistungsanforderung an die Brennkraftmaschine) der die Mischung führende Zweig geschlossen werden kann, so daß innerhalb kürzester Zeit die Brennkraftmaschine ausschließlich mit Frischluft versorgt wird.

Des Weiteren ist die Brennkraftmaschine vorzugsweise mit einem Regelungssystem ausgerüstet, welches eine separate Kontrolle von Druck, Temperatur und/oder Gaszusammensetzung im Ansaugkrümmer und/oder im Abgaskrümmer der Brennkraftmaschine erlaubt. Auf diese Weise können die durch die erfindungsgemäße Ausgestaltung bereitgestellten Steuerungsmöglichkeiten für einen optimalen Motorbetrieb ausgenutzt werden.

Im Folgenden wird die Erfindung mit Hilfe der Figuren, welche erfindungsgemäße Brennkraftmaschinen mit einer Niederdruck-AGR-Leitung darstellen, beispielhaft erläutert. Jede der Figuren zeigt dabei eine etwas andere Ausführungsform der Brennkraftmaschine, und zwar:
- Fig. 1: die Kombination mit einer zusätzlichen Hochdruck-AGR-Leitung;
- Fig. 2: eine Auslegung des Luftzufuhrweges zwischen Kompressor und Ansaugkrümmer in zwei Zweigen mit beziehungsweise ohne Zwischenkühler;
- Fig. 3: das System von Figur 2 mit einer zusätzlichen Hochdruck-AGR-Leitung;
- Fig. 4: eine zusätzliche Hochdruck-AGR-Leitung und einen regelbaren Zwischenkühler im Luftzufuhrweg;
- Fig. 5: eine Abwandlung des Systems von Figur 4;
- Fig. 6: das System nach Figur 2 mit einer Brennkraftmaschine mit variabler Steuerung der Ventile und/oder der Einspritzung.
- Fig. 7: das System nach Figur 1 mit eingebautem Wärmetauscher in der Hochdruck-AGR-Leitung und in der Niederdruck-AGR-Leitung. Ein Drosselventil kann bei oder hinter der Niederdruck-AGR-Leitung eingebaut sein.

Die in den Figuren dargestellten Luftzufuhrsysteme und Abgassysteme gehören jeweils zu einer Brennkraftmaschine (Motorblock nicht dargestellt) mit einem Abgasturbolader. Bei der Brennkraftmaschine kann es sich insbesondere um einen Dieselmotor mit Direkteinspritzung handeln. Abgasturbolader werden in den letzten Jahren aufgrund der Vorteile im Leistungsverhalten und der Kraftstoffökonomie auch bei kleineren Motoren von Personenkraftwagen immer öfter verwendet. Zunehmend strengere Vorschriften hinsichtlich der Emissionen von Stickstoffoxiden (NOx) und Ruß erzwingen dabei jedoch eine Motorsteuerung, welche hinsichtlich der Kraftstoffausnutzung und anderer Schadstoffe wie Kohlenmonoxid und Kohlenwasserstoffen nachteilig ist.

Eine gleichzeitige Verringerung der Emissionen von NOx und Ruß kann durch eine verbesserte Mischung zwischen Luft und Kraftstoff erfolgen, welche vorteilhafterweise zu gleichzeitigen Zündungen an verschiedenen Stellen der Brennkammer führt. Bei dieser Art der Verbrennung erfolgt die Wärmeabgabe sehr schnell, so daß die Verbrennung im Vergleich zu herkömmlichen Verbrennungen kurz ist. Aus diesem Grunde kann der Motor nicht über den gesamten Lastbereich hinweg in einem homogenen Modus betrieben werden, und der Verbrennungsprozeß ist extrem sensibel gegenüber geringsten Abweichungen vom optimalen Einstellpunkt der Parameter im Ansaugkrümmer.

Eine Verringerung der Emissionen könnte sowohl bei der herkömmlichen als auch bei der vorstehend beschriebenen schnelleren Verbrennung erreicht werden, wenn die Zustände des Einlaßgases und des Abgases besser kontrolliert werden könnten. Dieses Ziel wird mit den erfindungsgemäß ausgestalteten Brennkraftmaschinen erreicht, welche bei Verwendung eines entsprechenden Regelungssystems eine separate Kontrolle des Einlaßdruckes, der Einlaßtemperatur, des Inertgas-Gehaltes am Einlaß, des Abgasdruckes, der Abgastemperatur und/oder des Inertgas-Gehaltes im Abgas erlauben. Je nach spezieller Ausgestaltung der Brennkraftmaschine kann eine bestimmte Untermenge der genannten Parameter gleichzeitig geregelt werden. Damit läßt sich insbesondere das Kaltstartverhalten der Brennkraftmaschine, welches für einen hohen Anteil der Emissionen verantwortlich ist, erheblich verbessern.

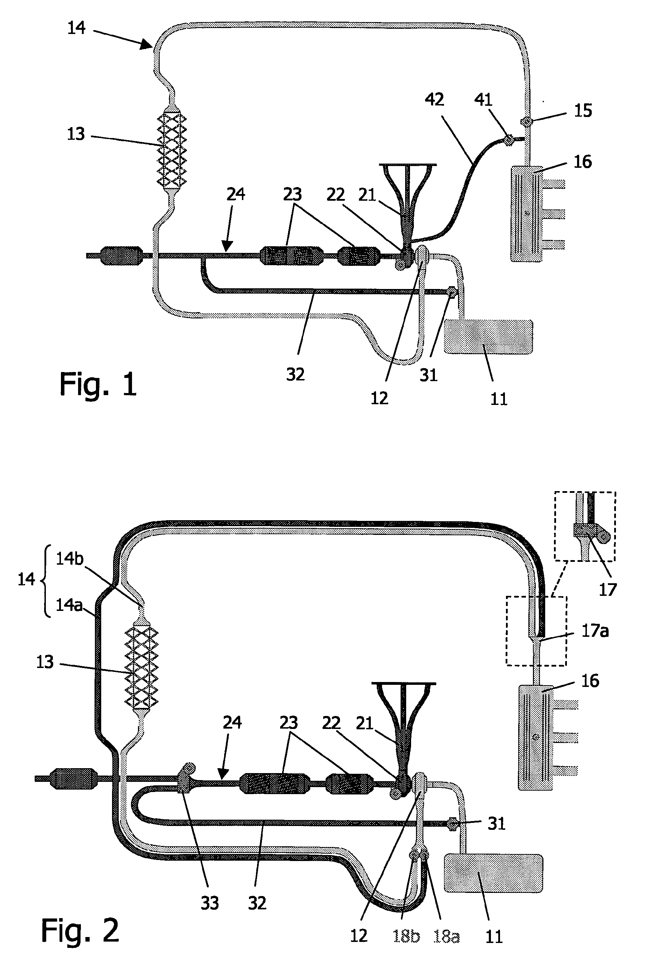

Figur 1 zeigt unter Auslassung nicht relevanter Teile sowie ohne Rücksicht auf die reale Geometrie eine erste Ausführungsform einer erfindungsgemäßen Brennkraftmaschine mit einem Frischluftzufuhr-System (hellgrau) sowie einem Abgassystem (dunkelgrau). Die Frischluftzufuhr besteht aus einem Luftzufuhrweg 14, in welchem in Strömungsrichtung der Frischluft gesehen der Reihe nach ein Luftfilter 11, der Kompressor 12 eines Abgasturboladers, ein Zwischenkühler 13 sowie eine Drossel 15 angeordnet sind. Der Luftzufuhrweg 14 mündet in den Ansaugkrümmer 16 der Brennkraftmaschine.

Das Abgassystem umfaßt einen Abgasweg 24, in welchem in Strömungsrichtung des Abgases gesehen der Reihe nach der Abgaskrümmer 21 der Brennkraftmaschine, die Turbine 22 des Abgasturboladers sowie ein aus einem Oxidationskatalysator und einem Teilchenfilter bestehendes Abgasnachbehandlungssystem 23 angeordnet sind. Die Turbine 22 ist mit dem Kompressor 12 des Abgasturboladers mechanisch gekoppelt, so daß der Abgasausstoß über die Turbine den Kompressor antreibt und so für eine Erhöhung des Ladedruckes gegenüber dem Umgebungsluftdruck sorgt. Zusätzlich oder alternativ könnte der Kompressor 12 auch von einem separaten Motor angetrieben sein (nicht dargestellt). Ferner kann die Geometrie der Turbine 22 und/oder des Kompressors 12 variabel sein (VGT: Variable Geometrie Turbine), um die Förderleistung nach Bedarf einstellen zu können.

Des Weiteren ist in Figur 1 eine Hochdruck-AGR-Leitung 42 dargestellt, deren Einlaß am Abgaskrümmer 21 vor der Turbine 22 liegt und deren Auslaß zwischen der Drossel 15 und dem Ansaugkrümmer 16 in den Luftzufuhrweg 14 führt. Die Menge an über diese Leitung 42 rezirkuliertem Abgas kann durch ein AGR-Regelventil 41 in der AGR-Leitung 42 kontrolliert werden. Darüber hinaus kann diese durch die Einstellung der Drossel 15 sowie - falls vorhanden - die variable Geometrie des Abgasturboladers 22, 12 gesteuert werden. Optional kann das durch die AGR-Leitung 42 fließende Abgas vor Eintritt in den Ansaugkrümmer 16 durch einen AGR-Kühler (nicht dargestellt) gekühlt werden.

Das bis hierher beschriebene System hat die folgenden Nachteile:
- Ein stark pulsierender Fluß der Abgasrückführung führt zu einer schlechten Qualität der Mischung von Abgas und Frischluft.
- Der Massenfluß des rückgeführten Abgases läßt sich nur schwer messen.
- Aufgrund der starken Wechselwirkung zwischen der Abgasrückführung und der Ladedruckerhöhung ist es schwierig, herkömmliche, dezentralisierte Regelungsalgorithmen zur Steuerung des AGR-Massenflusses beziehungsweise des Ladedruckes anzuwenden.
- Die Temperatur im Ansaugkrümmer 16 hängt von dem Ladedruck und dem AGR-Massenfluß ab und ist daher nicht unabhängig hiervon einstellbar.

Zur Vermeidung dieser Probleme wird bei der in Figur 1 dargestellten Brennkraftmaschine eine zusätzliche Niederdruck-AGR-Leitung 32 vorgesehen, welche von einem Punkt des Abgasweges 24 hinter den Katalysatoren 23 zu einem Punkt des Luftzufuhrweges 14 vor dem Kompressor 12 (und hinter dem Luftfilter 11) führt. Am Auslaß der Niederdruck-AGR-Leitung 32 ist ein AGR-Regelventil 31 angeordnet, über welches der Abgas-Massenfluß durch die AGR-Leitung 32 geregelt werden kann. Wenn dieses AGR-Regelventil 31 geöffnet ist, kann sich aus dem Luftfilter 11 kommende Frischluft mit Abgas aus der Niederdruck-AGR-Leitung 32 mischen, wobei das Mischungsverhältnis durch das AGR-Regelventil 31 eingestellt werden kann. Die erhaltene Gasmischung wird dann über den Kompressor 12 und den Luftzufuhrweg 14 mit dem Zwischenkühler 13 zum Ansaugkrümmer 16 geführt.

Erfindungsgemäß ist am Abzweig der Niederdruck-AGR-Leitung 32 vom Abgasweg 24 ein Abgasdruck-Regelventil (vgl. Ziffer 33 in Figur 2) vorgesehen sein, um den Druck im Abgasweg 24 sowie die Zuteilung des Abgases in die AGR-Leitung 32 zu regeln. Durch einen erhöhten Druckverlust über die Niederdruck-AGR-Leitung kann der Einfluß der Druckfluktuationen im Abgasweg auf die Niederdruck-AGR-Massenströmung minimert werden. Die AGR-Massenströmung wird dadurch stabiler und verbessert so die Mischung zwischen frische Luft und AGR.

Das oben genannte Regelventil ermöglicht auch eine Regelung des Gegendrukkes im Abgasweg. Dadurch wird die Leistungsanforderung des Motors erhöht was wiederum zu einem Temperaturanstieg im Abgasweg führt. Falls ein Ruß-Filter im Abgasweg vorhanden ist, kann die Regeneration dieses Filter durch diese Temperaturansteigerung ermöglicht werden.

Die Vorteile des zusätzlichen Niederdruck-AGR-Systems sind insbesondere folgende:
- Sehr gute Mischung von rezirkuliertem Abgas und Frischluft aufgrund der gemeinsamen Führung über den Kompressor 12 und den langen Luftzufuhrweg 14. Hierdurch wird eine gleichmäßigere Verteilung des Abgases zwischen den verschiedenen Zylindern der Brennkraftmaschine und damit eine Verringerung der Emissionen erreicht.
- Höhere Leistung des Abgasturboladers, da auch das rezirkulierte Abgas über die Turbine 22 geführt wird.
- Die Temperatur des Gemisches aus Frischluft und Abgas im Ansaugkrümmer 16 kann durch das Verhältnis der Abgasrückführungen über die Hochdruck-AGR-Leitung 42 und die Niederdruck-AGR-Leitung 32 verändert werden.
- Verringertes Risiko, daß es bei höheren AGR-Raten zu Kompressorpumpen kommt.
- Vereinfachte Abstimmungsprozedur zwischen Turbolader und Motor.

Falls das erwähnte Abgasdruck-Regelventil (Figur 2, Ziffer 33) verwendet wird, ergeben sich als weitere Vorteile:
- Maximale Regelbarkeit der AGR-Rate zwischen 0 % (AGR-Regelventil 31 geschlossen) und 100 % (AGR-Regelventil 31 vollständig geöffnet und Abgasdruck-Regelventil vollständig auf die AGR-Leitung 32 gestellt).
- Schnelleres Aufwärmen der Brennkraftmaschine: Über die Einstellung des Abgasdruck-Regelventils kann der Flußwiderstand im Abgasweg 24 erhöht werden, was zu einer höheren Abgastemperatur und damit auch zu einer höheren Temperatur des rückgeführten Abgases führt. Hierdurch verringert sich die Zeit, welche die Brennkraftmaschine und/oder das Abgasnachbehandlungssystem 23 zum Erreichen ihrer Betriebstemperatur benötigen.
- Verbesserte longitunale Mischung zwischen frischer Luft und Niederdruck-AGR.

Figur 2 zeigt eine alternative Ausführungsform einer Brennkraftmaschine, wobei gleiche Bezugsziffern wie bei Figur 1 hier und im Folgenden dieselben Komponenten bezeichnen und daher nicht im Einzelnen erneut erläutert werden. Es bestehen folgende Unterschiede zum System von Figur 1:
- Die Hochdruck-Abgasrückführung (Ziffer 42 in Figur 1) fehlt.
- Am Einlaß der Niederdruck-AGR-Leitung 32 ist ein Abgasdruck-Regelventil 33 vorgesehen, dessen Bedeutung bereits im Zusammenhang mit Figur 1 erläutert wurde.
- Der Luftzufuhrweg 14 besteht auf dem Abschnitt zwischen dem Kompressor 12 und dem Ansaugkrümmer 16 aus zwei parallel geführten Zweigen, wobei (nur) der zweite "Niedrigtemperatur"-Zweig 14b einen Zwischenkühler 13 enthält.

Die zwei parallelen Zweige 14a, 14b der Frischluftzufuhr können in einem gemeinsamen Mündungsstück 17a vor dem Ansaugkrümmer 16 enden. Wie der Einsatz in der Figur zeigt, kann auch am Verbindungspunkt der beiden Zweige 14a, 14b ein einstellbares Mischventil 17 vorgesehen sein.

Während des Betriebs der Brennkraftmaschine wird Frischluft aus dem Luftfilter 11 mit Abgas aus der Niederdruck-AGR-Leitung 32 gemischt, wobei das Mischungsverhältnis durch das AGR-Regelventil 31 und das Abgasdruck-Regelventil 33 eingestellt werden kann. Hinter dem Kompressor 12 wird das Gemisch aus Abgas und Frischluft auf den Hochtemperatur-Zweig 14a und den Niedrigtemperatur-Zweig 14b, welcher über den Zwischenkühler 13 führt, aufgeteilt, wobei das Verhältnis der Aufteilung durch die an den Einlässen der Zweigleitungen 14a, 14b sitzenden Regelventile 18a, 18b eingestellt werden kann. Durch die Einstellung der beiden Ventile 18a, 18b kann somit auch die Temperatur des Gases im Ansaugkrümmer 16 kontrolliert werden. Die Mischung der gekühlten und ungekühlten Gasströme aus den Zweigleitungen 14a, 14b kann ferner durch das Mischventil 17 kontrolliert werden, falls ein solches vorgesehen ist.

Zur Kontrolle von Parametern wie dem Ladedruck, der Temperatur im Ansaugkrümmer und dem Sauerstoffgehalt im Ansaugkrümmer können hier und bei den anderen Ausgestaltungen der Brennkraftmaschine geeignete Sensoren vorgesehen werden (nicht dargestellt), welche eine rückgekoppelte Regelung ermöglichen.

Mit dem in Figur 2 dargestellten System können zusätzlich zu den Vorteilen des Systems von Figur 1 folgende positive Wirkungen erzielt werden:
- Die Gastemperatur im Ansaugkrümmer 16 kann durch die zweisträngige Auslegung des Frischluftweges 14 zwischen der Auslaßtemperatur des Kompressors 12 und der Auslaßtemperatur des Zwischenkühlers 13 geregelt werden. Auf diese Weise werden Temperaturschwankungen im Ansaugkrümmer aufgrund wechselnder Umgebungstemperaturen verringert und die Möglichkeiten zur Emissionskontrolle verbessert. Die Temperaturregelung kann unabhängig vom Abgasrückführungsbetrieb erfolgen.
- Schnelle Motorreaktion auf Drehmomentanforderungen: Wenn die in Figur 2 dargestellte Anordnung so abgewandelt wird, daß eine der zwei Leitungen 14a, 14b nur für Frischluft und die andere nur für eine Mischung aus Abgas und Frischluft verwendet wird, kann während einer Beschleunigung des Fahrzeuges der abgashaltige Zweig vollständig geschlossen und nur der Frischluftzweig aktiviert werden. Hierdurch verringert sich die Menge an inaktivem Gas im Einlaßsystem, welche vor Erreichen des maximalen Drehmomentpotentials des Motors entfernt werden muß. Das System kann daher in kürzerer Zeit auf einen Anstieg des geforderten Motordrehmomentes reagieren.
- Das Abgasdruck-Regeiventii 33 kann (bei geschlossenem AGR-Regelventil 31) als einer der hauptsächlichen Regelparameter zur Unterstützung der Regeneration eines Dieselpartikelfilters 23 verwendet werden und dabei das Risiko eines Kompressorpumpens minimieren. Der Grund hierfür liegt in der Verschiebung der Flußbegrenzung von der Einlaßseite zur Auslaßseite, so daß der Fluß durch den Kompressor 12 nicht vermindert wird. Der erhöhte Rückdruck führt zu einer Erhöhung der Pumparbeit am Motor, so daß eine höhere Kraftstoffzufuhr zum Motor zur Konstanthaltung der Motordrehzahl erforderlich ist. In Kombination führen diese Effekte zu einer erhöhten Abgastemperatur, welche die Regeneration des Partikelfilters unterstützt.
- Wie bereits in Zusammenhang mit Figur 1 erläutert wurde, kann durch das Abgasdruck-Regelventil 33 ein schnelleres Aufwärmen des Motors erreicht werden. Das Aufwärmen kann zusätzlich unterstützt werden durch die Steuerung der Position des Einlaßventils 18a am Hochtemperatur-Zweig 14a, wobei das Regelventil 18b am Niedrigtemperatur-Zweig 14b während des Aufwärmens des Motors geschlossen wird. Ferner läßt sich die Drehzahl des Abgasturboladers durch entsprechende Regelung der Geometrie verändern. Auf diese Weise kann der Temperaturunterschied über den Kompressor weiter erhöht werden.

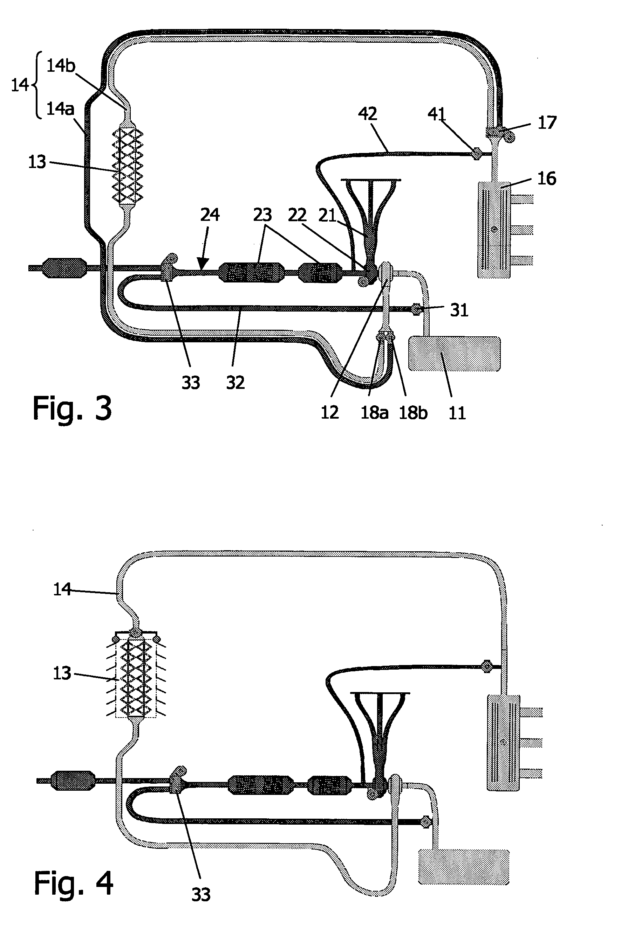

Das in Figur 3 dargestellte System unterscheidet sich von dem aus Figur 2 durch eine zusätzliche Hochdruck-AGR-Leitung 42, welche vom Abgasweg 24 hinter der Turbine 22 und vor den Katalysatoren 23 abzweigt und welche zwischen dem Mischventil 17 und dem Ansaugkrümmer 16 in den Luftzufuhrweg einmündet. Zur Regelung der Abgasrückführung über diesen Weg ist in der Hochdruck-AGR-Leitung 42 ein AGR-Regelventil 41 vorgesehen.

Die zusätzliche Hochdruck-Abgasrückführung bietet gegenüber dem System von Figur 2 zusätzliche Regelungsoptionen. Im Unterschied zu dem Hochdruck-AGR-System von Figur 1 ist dabei der Einlaß jedoch nicht stromaufwärts, sondern stromabwärts der Turbine 22 des Turboladers angeordnet. Dies hat den Vorteil, daß die Dynamik des Turboladers vom AGR-Betrieb weniger beeinflußt wird und daß das gesamte Abgas zum Antrieb des Turboladers beiträgt. Damit bei dem gewählten Entnahmepunkt für das Abgas immer ein positiver Abgasfluß zum Ansaugkrümmer 16 auftritt, kann es vorteilhaft oder gegebenenfalls auch erforderlich sein, den Rückdruck des Abgases zu erhöhen. Dies kann durch eine entsprechende Einstellung des Abgasdruck-Regelventils 33 und/oder des Niederdruck-AGR-Ventils 31 geschehen.

Figur 4 zeigt eine Abwandlung des Systems von Figur 3, bei welcher der Luftzufuhrweg nurmehr aus einer einzigen Leitung 14 besteht, welche über einen Zwischenkühler 13 führt. Durch den Fortfall des Hochtemperatur-Zweiges wird das System kostengünstiger und die Kontrolle vereinfacht. Um dennoch die Temperatur des Gases im Ansaugkrümmer kontrollieren zu können, ist der Zwischenkühler 13 in seiner Kühlwirkung einstellbar ausgestaltet. Dies kann z. B. durch die Veränderung des durch die Kühlrippen des Zwischenkühlers 13 geführten Flusses und/oder durch ein Bypaß-Rohr parallel zum Zwischenkühler mit einem stromaufwärtigen oder stromabwärtigen Regelventil erreicht werden.

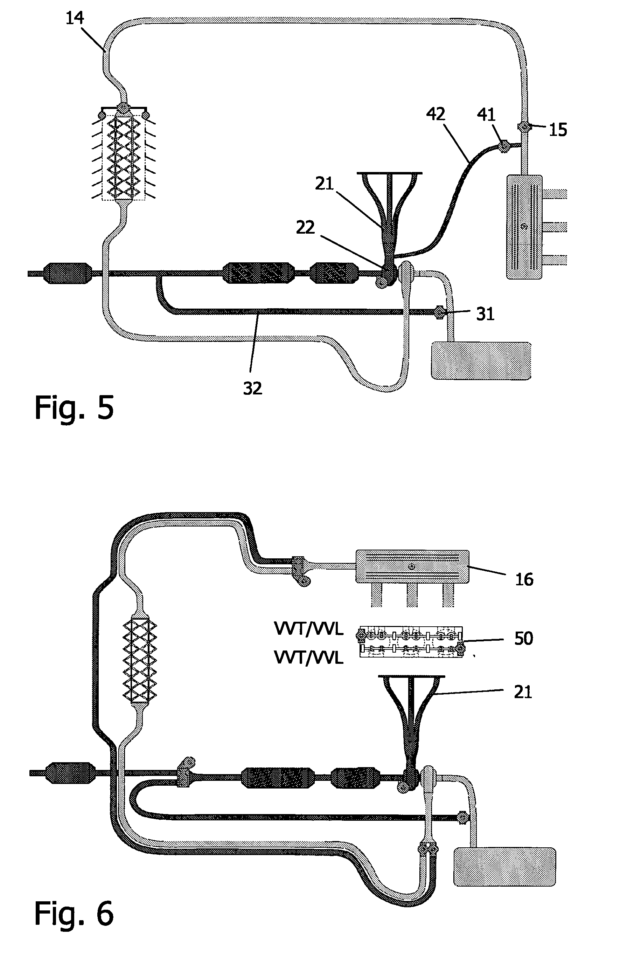

Figur 5 zeigt eine Vereinfachung des Systems von Figur 4. Dabei ist zur Verringerung der Produktionskosten das Abgasdruck-Regelventil (Ziffer 33 in Figur 4) am Einlaß der Niederdruck-AGR-Leitung 32 fortgelassen. Weiterhin wurde der Einlaß der Hochdruck-AGR-Leitung 42 vor die Turbine 22 an den Abgaskrümmer 21 gelegt. Dies entspricht einer Entnahme des rückgeführten Abgases in einem Hochdruck-Abschnitt des Abgasweges (vgl. Figur 1).

Darüber hinaus wurde im Luftzufuhrweg 14 vor dem Einlaß der Hochdruck-AGR-Leitung 42 eine AGR-Drossel 15 vorgesehen. Die Vorteile einer solchen Drossel 15 bestehen in der Ermöglichung einer von der Einlaßseite aus initiierten Regeneration eines eventuell vorhandenen Rußpartikel-Filters (vgl. US 6 304 815), der Verminderung des Motorratterns während des Abschaltens, und der Ermöglichung höherer AGR-Raten durch Drosselung des Einlasses.

In Figur 6 ist eine optionale Erweiterung des Systems von Figur 2 dargestellt, wobei zwischen dem Ansaugkrümmer 16 und dem Abgaskrümmer 21 der Motorblock 50 mit den Einlaßventilen (oben) und den Auslaßventilen (unten) angedeutet ist. Zur genaueren und schnelleren Regelung des Gasaustausches wird dabei an den Einlaßventilen und/oder an den Auslaßventilen eine variable Ventilzeitsteuerung (VVT: Variable Valve Timing) und/oder variable Ventilhubsteuerung (VVL: Variable Valve Lift) verwendet. Eine solche variable Ventilsteuerung kann selbstverständlich auch bei allen anderen Ausführungsformen der Erfindung eingesetzt werden.

Die VVTM/L-Steuerung auf der Abgasseite ermöglicht den Verzicht auf eine Hochdruck-Abgasrückführung, da über das VVTM/L-System die Menge an im Zylinder zurückgehaltenem Abgas kontrolliert werden kann (interne Abgasrückführung). Auf der Einlaßseite kann durch das VVTM/L-System das effektive Kompressionsverhältnis des Motors variiert werden. Z.B. kann eine Verzögerung des Schließens der Einlaßventile die effektive Länge des Verdichtungstaktes des Kolbens und damit auch die während des Verbrennungsprozesses maximal erreichte Temperatur reduzieren. Die variable Ventilsteuerung stellt so ein effizientes Mittel zur Verringerung von NOx-Emissionen durch eine Verbrennung bei niedriger Temperatur bereit. Darüber hinaus kann die Brennkraftmaschine auch mit der Möglichkeit mehrerer Diesel-Einspritzungen pro Takt versehen sein.

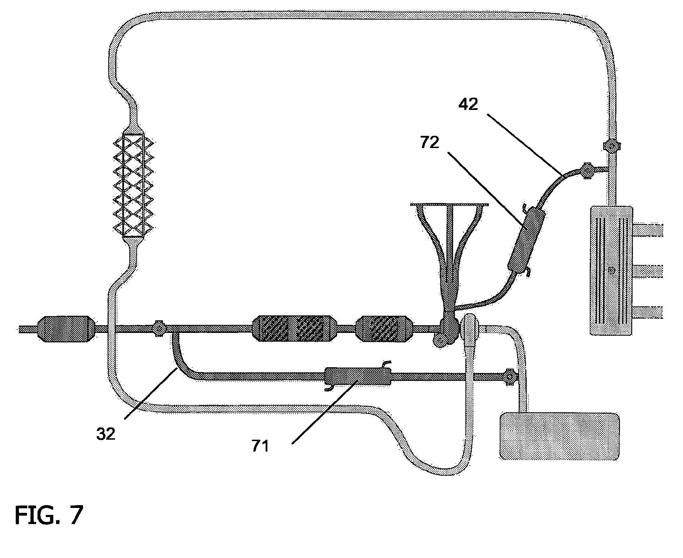

Figur 7 ist eine alternative Ausführungsform des Systems von Figur 1, bei welcher sowohl die Hochdruck-AGR-Leitung 42 als auch die Niederdruck-AGR-Leitung 32 einen Zwischenkühler 71, 72 enthalten. Der Einbau von Zwischenkühler 71, 72 in den AGR-Zweigen 32, 42 ist nicht obligatorisch aber kann erforderlich sein, um die Motoremissionen weiter zu senken. Deswegen kann ein Zwischenkühler 71, 72 in der Hochdruck-AGR-Leitung 42 und/oder in der Niederdruck-AGR-Leitung 32 in den oben schon beschriebenen Systemen (Figur 1 bis 6) eingebaut werden, wenn es zur Erreichung der Emissionsziele und/oder zum Schutz des Motors erforderlich ist.
Der Druck im Abgasweg ist durch die Positionseinstellung eines Drosselventils (nicht gezeigt) in der Nähe oder hinter dem Niederdruck-AGR-Abgaszweig regelbar.

## Patentansprüche

1. Brennkraftmaschine, enthaltend
a) einen Abgasturbolader mit einer im Abgasweg (24) angeordneten Turbine (22) und einem mit dieser gekoppelten, im Luftzufuhrweg (14) liegenden Kompressor (12);
b) ein Abgasnachbehandlungssystem (23), das im Abgasweg (24) hinter der Turbine (22) angeordnet ist;
c) eine Niederdruck-Abgasrückführungsleitungsleitung (32), welche vom Abgasweg (24) hinter dem Abgasnachbehandlungssystem (23) zum Luftzufuhrweg (14) vor dem Kompressor (12) führt;
d) eine Hochdruck-Abgasrückführungsleitung (42), welche vom Abgasweg (24) vor dem Abgasnachbehandlungssystem (23) zum Luftzufuhrweg (14) hinter dem Kompressor (12) führt,
**dadurch gekennzeichnet, dass**
im Abgasweg (24) hinter oder an dem Abzweig der Niederdruck-Abgasrückführungsleitung (32) ein Druckregelventil (33) angeordnet ist.

2. Brennkraftmaschine nach Anspruch 1,
**dadurch gekennzeichnet, dass**
in der Hochdruck-Abgasrückführungsleitung (42) ein AGR-Kühler (71, 72) eingebaut ist.

3. Brennkraftmaschine nach Anspruch 1 oder 2,
**dadurch gekennzeichnet, dass**
in der Niederdruck-Abgasrückführungsleitungsleitung(32) ein AGR-Kühler (71, 72) eingebaut ist.

4. Brennkraftmaschine nach Anspruch 1, 2 oder 3,
**dadurch gekennzeichnet, daß**
am Auslaß der Niederdruck-Abgasrückführungsleitung (32) in den Luftzufuhrweg (14) ein Regelventil (31) angeordnet ist.

5. Brennkraftmaschine nach mindestens einem der Ansprüche 1 bis 4,
**dadurch gekennzeichnet, daß**
der Einlaß der Hochdruck-Abgasrückführungsleitung (42) zwischen der Turbine (22) und dem Abgasnachbehandlungssystem (23) vom Abgasweg (24) abzweigt.

6. Brennkraftmaschine nach mindestens einem der Ansprüche 1 bis 5,
**dadurch gekennzeichnet, daß**
der Einlaß der Hochdruck-Abgasrückführungsleitung (42) vor der Turbine (22) vom Abgasweg (24) abzweigt, wobei im Luftzufuhrweg (14) vor dem Auslaß der Hochdruck-Abgasrückführungsleitung (42) ein Drosselventil (15) angeordnet ist.

7. Brennkraftmaschine nach mindestens einem der Ansprüche 1 bis 6,
**dadurch gekennzeichnet, daß**
in dem Frischluftweg (14) zwischen Kompressor (12) und Ansaugkrümmer (16) ein in seiner Kühlwirkung einstellbarer Zwischenkühler (13) angeordnet ist.

8. Brennkraftmaschine nach mindestens einem der Ansprüche 1 bis 7,
**dadurch gekennzeichnet, dass**
der Luftzufuhrweg (14) zwischen dem Ansaugkrümmer (16) und dem Kompressor (12) einen ersten Zweig (14a) und einen hierzu parallelen zweiten Zweig (14b), in welchem ein Zwischenkühler (13) angeordnet ist, aufweist, und dass Mittel (18a, 18b, 17) zur einstellbaren Verteilung der Flussraten auf die beiden Zweige (14a, 14b) vorhanden sind.

9. Brennkraftmaschine nach Anspruch 8,
**dadurch gekennzeichnet, daß**
in den Zweigen (14a, 14b) des Luftzufuhrweges (14) jeweils ein Regelventil (18a, 18b) und/oder am gemeinsamen Auslaß der Zweige (14a, 14b) ein Mischventil (17) angeordnet ist.

10. Brennkraftmaschine nach Anspruch 8 oder 9,
**dadurch gekennzeichnet, daß**
einer der Zweige nur an die Frischluftzufuhr und der andere Zweig an eine Mischleitung angeschlossen ist, die von der Frischluftzufuhr und der Niederdruck-Abgasrückführungsleitung gespeist wird.

11. Brennkraftmaschine nach mindestens einem der Ansprüche 1 bis 10,
**dadurch gekennzeichnet, daß**
diese mit einem Regelungssystem zur separaten Kontrolle von Druck, Temperatur und/oder Gaszusammensetzung im Ansaugkrümmer (16) und/oder im Abgaskrümmer (21) ausgerüstet ist.

## Claims

1. Internal combustion engine, comprising
a) an exhaust gas turbocharger having a turbine (22) which is arranged in the exhaust gas path (24), and a compressor (12) which is coupled to the latter and is located in the air supply path (14);
b) an exhaust gas post-treatment system (23) which is arranged downstream of the turbine (22) in the exhaust gas path (24);
c) a low-pressure exhaust gas recirculation-line line (32) which leads from the exhaust gas path (24), downstream of the exhaust gas post-treatment system (23), to the air supply path (14) upstream of the compressor (12),
d) a high-pressure exhaust gas recirculation line (42) which leads from the exhaust gas path (24), upstream of the exhaust gas post-treatment system (23), to the air supply path (14) downstream of the compressor (12),
**characterized in that**
a pressure regulating valve (33) is arranged in the exhaust gas path (24) downstream or in the branch of the low-pressure exhaust gas recirculation line (32).

2. Internal combustion engine according to Claim 1,
**characterized in that**
an exhaust gas recirculation cooler (71, 72) is installed in the high-pressure exhaust gas recirculation line (42).

3. Internal combustion engine according to Claim 1 or 2,
**characterized in that**
an exhaust gas recirculation cooler (71, 72) is installed in the low-pressure exhaust gas recirculation line (32).

4. Internal combustion engine according to Claim 1, 2 or 3,
**characterized in that**
a regulating valve (31) is arranged on the outlet of the low-pressure exhaust gas recirculation line (32), in the air supply path (14).

5. Internal combustion engine according to at least one of Claims 1 to 4,
**characterized in that**
the inlet of the high-pressure exhaust gas recirculation line (42) branches off from the exhaust gas path (24) between the turbine (22) and the exhaust gas post-treatment system (23).

6. Internal combustion engine according to at least one of Claims 1 to 5,
**characterized in that**
the inlet of the high-pressure exhaust gas recirculation line (42) branches off from the exhaust gas path (24) upstream of the turbine (22), a throttle valve (15) being arranged in the air supply path (14) upstream of the outlet of the high-pressure exhaust gas recirculation line (42).

7. Internal combustion engine according to at least one of Claims 1 to 6,
**characterized in that**
an intermediate cooler (13) which can be adjusted in terms of its cooling effect is arranged in the fresh air path (14) between the compressor (12) and the intake manifold (16).

8. Internal combustion engine according to at least one of Claims 1 to 7,
**characterized in that**
the air supply path (14) has, between the intake manifold (16) and the compressor (12), a first branch (14a) and a second branch (14b) which is parallel thereto and in which an intermediate cooler (13) is arranged, and **in that** means (18a, 18b, 17) are provided for adjustably distributing the flow rates between the two branches (14a, 14b).

9. Internal combustion engine according to Claim 8,
**characterized in that**
a regulating valve (18a, 18b) is arranged in each of the branches (14a, 14b) of the air supply path (14), and/or a mixing valve (17) is arranged at the common outlet of the branches (14a, 14b).

10. Internal combustion engine according to Claim 8 or 9,
**characterized in that**
one of the branches is connected only to the fresh air supply, and the other branch is connected to a mixing line which is fed from the fresh air supply and the low-pressure exhaust gas recirculation line.

11. Internal combustion engine according to at least one of Claims 1 to 10,
**characterized in that**
the latter is equipped with a regulating system for separately checking pressure, temperature and/or gas composition in the intake manifold (16) and/or in the exhaust gas manifold (21).

## Revendications

1. Moteur à combustion interne comprenant :
a) un turbocompresseur avec une turbine (22) disposée dans la voie des gaz d'échappement (24) et un compresseur (12) accouplé à celle-ci, situé dans la voie d'alimentation d'air (14) ;
b) un système de post-traitement des gaz d'échappement (23), qui est disposé dans la voie des gaz d'échappement (24) derrière la turbine (22) ;
c) une conduite de recirculation des gaz d'échappement à basse pression (32), qui conduit de la voie de gaz d'échappement (24) derrière le système de post-traitement des gaz d'échappement (23) jusqu'à la voie d'alimentation d'air (14) avant le compresseur (12) ;
d) une conduite de recirculation des gaz d'échappement haute pression (42), qui conduit de la voie de gaz d'échappement (24) avant le système de post-traitement des gaz d'échappement (23) jusqu'à la voie d'alimentation d'air (14) derrière le compresseur (12),
**caractérisé en ce que**
dans la voie des gaz d'échappement (24) derrière ou au niveau du branchement de la conduite de recirculation des gaz d'échappement basse pression (32), est disposée une soupape de régulation de la pression (33).

2. Moteur à combustion interne selon la revendication 1,
**caractérisé en ce que**
dans la conduite de recirculation des gaz d'échappement haute pression (42) est intégré un refroidisseur de RGE (71, 72).

3. Moteur à combustion interne selon la revendication 1 ou 2,
**caractérisé en ce que**
dans la conduite de recirculation des gaz d'échappement basse pression (32) est incorporé un refroidisseur de RGE (71, 72).

4. Moteur à combustion interne selon la revendication 1, 2 ou 3,
**caractérisé en ce que**
au niveau de la sortie de la conduite de recirculation des gaz d'échappement basse pression (32) est disposée, dans la voie d'alimentation d'air (14), une soupape de régulation (31).

5. Moteur à combustion interne selon au moins l'une quelconque des revendications 1 à 4,
**caractérisé en ce que**
l'entrée de la conduite de recirculation des gaz d'échappement haute pression (42) part de la voie de gaz d'échappement (24) entre la turbine (22) et le système de post-traitement des gaz d'échappement (23).

6. Moteur à combustion interne selon au moins l'une quelconque des revendications 1 à 5,
**caractérisé en ce que**
l'entrée de la conduite de recirculation des gaz d'échappement haute pression (42) part de la voie des gaz d'échappement (24) avant la turbine (22), une soupape d'étranglement (15) étant disposée dans la voie d'alimentation d'air (14) avant la sortie de la conduite de recirculation des gaz d'échappement haute pression (42).

7. Moteur à combustion interne selon au moins l'une quelconque des revendications 1 à 6,
**caractérisé en ce que**
dans la voie d'air frais (14) entre le compresseur (12) et le collecteur d'admission (16) est disposé un refroidisseur intermédiaire (13) dont l'effet de refroidissement est ajustable.

8. Moteur à combustion interne selon au moins l'une quelconque des revendications 1 à 7,
**caractérisé en ce que**
la voie d'alimentation d'air (14) présente entre le collecteur d'admission (16) et le compresseur (12), une première branche (14a) et une deuxième branche (14b) parallèle à celle-ci, dans laquelle est disposé un refroidisseur intermédiaire (13), et **en ce que** des moyens (18a, 18b, 17) sont prévus pour la répartition ajustable des débits entre les deux branches (14a, 14b).

9. Moteur à combustion interne selon la revendication 8,
**caractérisé en ce que**
dans les branches (14a, 14b) de la voie d'alimentation d'air (14) est disposée à chaque fois une soupape de régulation (18a, 18b) et/ou sur la sortie commune des branches (14a, 14b), une soupape de mélange (17).

10. Moteur à combustion interne selon la revendication 8 ou 9,
**caractérisé en ce que**
l'une des branches n'est raccordée qu'à l'alimentation en air frais et l'autre branche à une conduite de mélange, qui est alimentée par l'alimentation en air frais et la conduite de recirculation des gaz d'échappement basse pression.

11. Moteur à combustion interne selon au moins l'une quelconque des revendications 1 à 10,
**caractérisé en ce que**
celui-ci est équipé d'un système de régulation pour la commande séparée de la pression, de la température et/ou de la composition des gaz dans le collecteur d'admission (16) et/ou dans le collecteur d'échappement (21).
